**Europäisches Patentamt**

**European Patent Office**

**Office européen des brevets**

(19)

(11) Veröffentlichungsnummer: **0 092 030**
**B1**

# EUROPÄISCHE PATENTSCHRIFT

(45) Veröffentlichungstag der Patentschrift:
**08.04.87**

(21) Anmeldenummer: **83101278.6**

(22) Anmeldetag: **10.02.83**

(51) Int. Cl.⁴: **B 62 J 15/00**

(54) **Spritzschutz für Fahrräder, wie Rennvelos und dergl.**

(30) Priorität: **19.04.82 CH 2306/82**

(43) Veröffentlichungstag der Anmeldung:
**26.10.83 Patentblatt 83/43**

(45) Bekanntmachung des Hinweises auf die Patenterteilung:
**08.04.87 Patentblatt 87/15**

(84) Benannte Vertragsstaaten:
**AT BE DE FR GB IT LU NL SE**

(56) Entgegenhaltungen:
**BE-A-857 921**
**DE-C-90 390**
**DE-C-98 194**
**DE-C-144 070**
**FR-A-570 558**
**FR-A-1 018 188**
**GB-A-626 438**

(73) Patentinhaber: **Grüter, Walter, Sonnhaldenstrasse 9, CH- 8302 Kloten (CH)**

(72) Erfinder: **Grüter, Walter, Sonnhaldenstrasse 9, CH- 8302 Kloten (CH)**

(74) Vertreter: **Rebmann, John A., Rebmann- Kupfer & Co., Patentanwaltsbureau Augustiner- Glockengasse 18, CH- 8022 Zürich 1 (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 092 030 B1

## Beschreibung

Bei bekannten Schutzblechen an Rennrädern (Rennvelos), welche mehr als Ein Viertel des Radumfanges einnehmen, ist die Montage sehr aufwendig; so sind die Bremsen zu entfernen, wieder zu montieren und verschiedene Verschraubungsarbeiten auszuführen.

Die Räder (Velos) von Berufs- und Amateur-Rennfahrern besitzen in der Regel keine Schutzbleche und die bei schlechtem Wetter unvermeidlichen Verschmutzungen treffen nicht nur diese selbst, sondern auch hinten liegende Fahrer.

Die Montage von konventionellen Schutzblechen, sei es auch nur vorübergehend, wird allgemein abgelehnt. Grosse Schutzbleche erfordern eine aufwendige Montage, weil die Bremsen vorher zu entfernen und mehrere Verschraubungsarbeiten vorzunehmen sind, was auch bei der Wiedermontage der Fall ist. Bekannt geworden sind auch kleine Schutzbleche, die am Sattelrohr oder an Gabelrohren der Rahmen verankert sind; solche sind unter der Sattelpartie montiert und nur für das Hinterrad verwendbar. Diese kleinen Schutzbleche bieten keinen Schutz für den Rücken und das Gesäss des Fahrers. Auch private Fahrer ziehen bei trockenem Wetter das Fahren ohne Schutzblech vor, wünschen jedoch bei Regen ein solches. Das Mitführen von Schutzblechen durch den Fahrer war wegen der erheblichen Raumbeanspruchung ausgeschlossen.

Beim Spritzschutz für Fahrräder nach der GB-A-626.438 sind an das kreisbogenförmige, hohlgeformte Schutzblech Streben angelenkt, welche aus zwei teleskopartig ineinander schiebbaren Teilen bestehen, die das Anpassen an die verschiedenen Radgrössen bezwecken. Durch Umschwenken der Streben ist es denkbar diese in den Hohlkörper einzufügen, praktisch brauchbar ist dies für Rennvelos jedoch nicht. Bei normalen Fahrrädern mit grossen Rädern und Schutzblechen, die sich über Eindrittel des Radumfanges erstrecken, sind die Schutzbleche permanent am Rahmen befestigt und eine Notwendigkeit zum Zusammenlegen, zwecks Versorgung auf kleinem Raum, besteht nicht. Die Konstruktionen bekannter Ausführungen lassen dies auch nicht zu, einerseits weil kein Bedarf besteht und andererseits die Umtriebe beim Anbringen und Wegnehmen zu gross sind. Der Oberbegriff des Anspruchs 1 ist durch der GB-A-626 438 bekannt.

Der Erfindung liegt die Aufgabe zugrunde, den o.g. Spritzschutz sekundenschnell zu montieren sowie zu demontieren und bei trockenem Wetter bei Nichtgebrauch in ein kompaktes, leicht mitführbares Taschengepäck zu verwandeln.

Erfindungsgemäss wird diese Aufgabe durch die im Patentanspruch genannten Merkmale gelöst.

Nachfolgend isr die Erfindung in einem Ausführungsbeispiel an Hand der Zeichnung erläutert. Es zeigen :

Fig. 1 eine schematische Darstellung eines Velos mit dem Spritzschutz,
Fig. 2 eine Seitenansicht des Spritzschutzes allein,

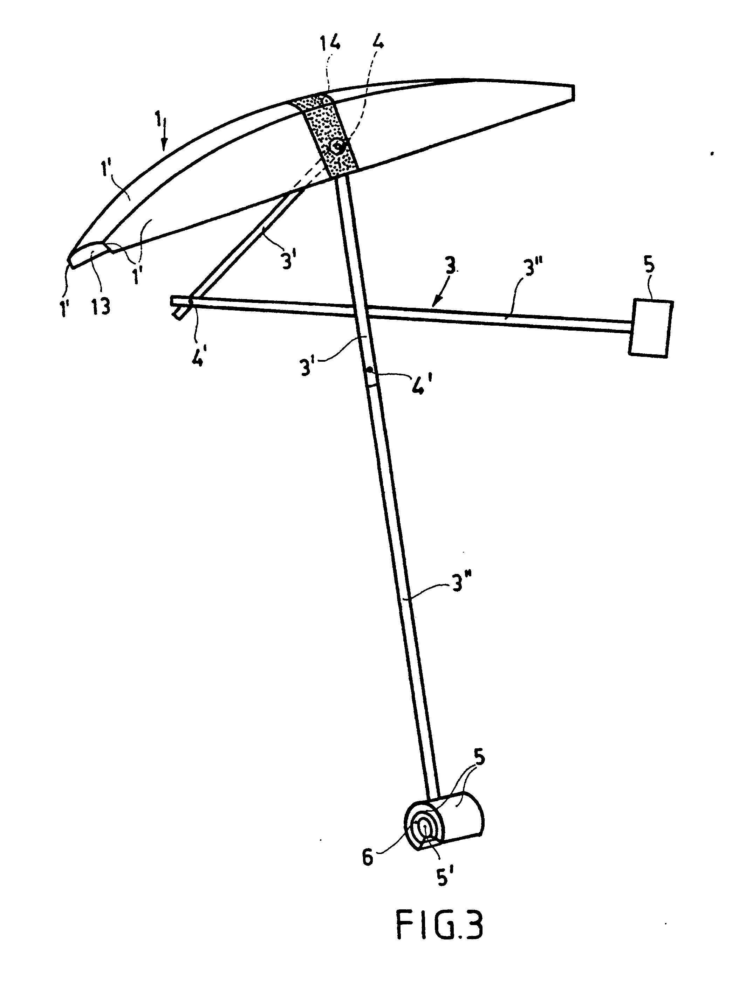

Fig. 3 eine ebensolche, den Spritzschutz beim Zusammenlegen,

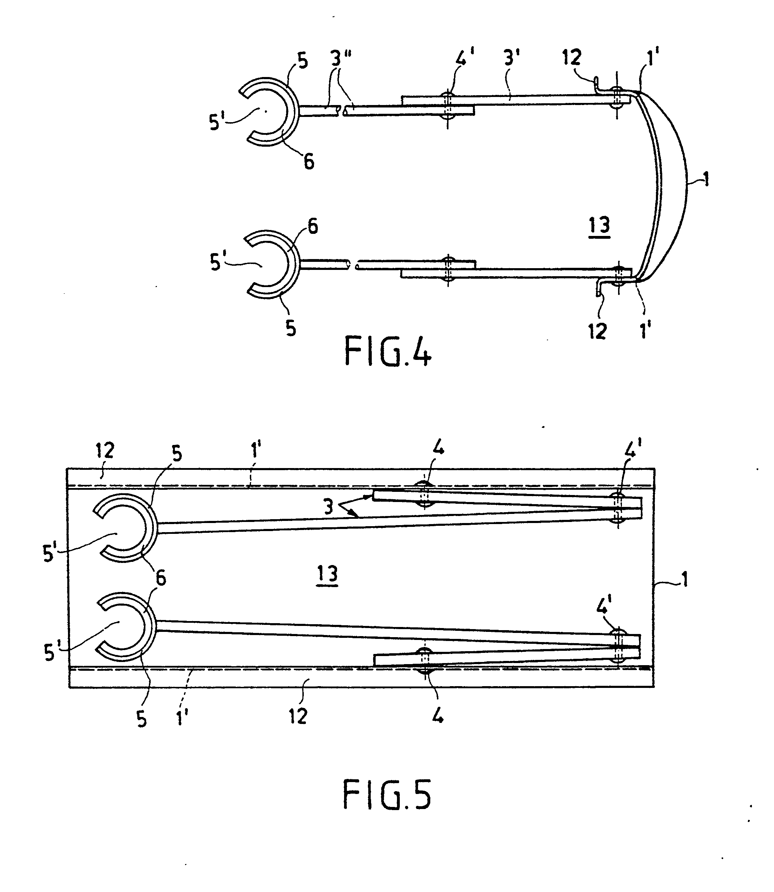

Fig. 4 eine Draufsicht desselben, die Streben aus gelegt und
Fig. 5 eine Ansicht, den Spritzschutz in ein kompaktes Gepäckstück zusammengelegt.

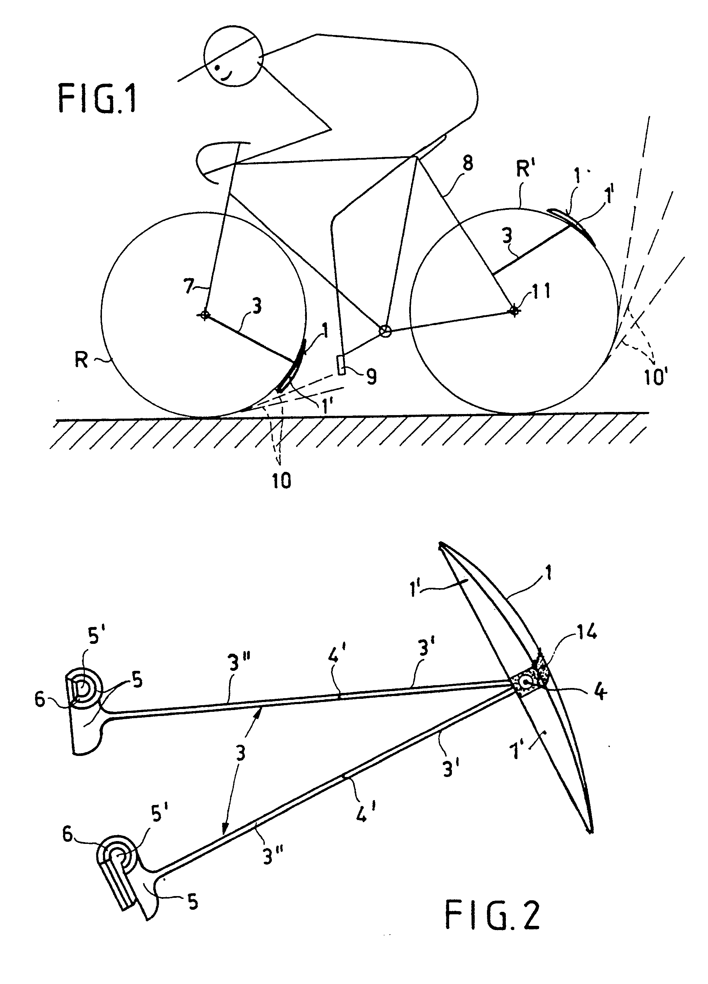

Der Spritzschutz besteht aus eine, kreissegmentartigen, hohlgeformten, im Querschnitt kreisbogenförmigen Schutzkörper 1 aus Blech oder zähelastischem Kunststoff. Der Schutzkörper 1 ist nur ca. 15-25 cm lang, was ca. Einzehntel des Umfanges eines Normalrades ist. Er ist in seiner Querrichtung verformbar, in der Längsrichtung dagegen zufolge der stabilisierenden Seitenwände 1' des Schutzkörpers 1 jedoch formfest. Die die Enden des kreisbogenförmigen Schutzkörpers 1 verbindenden Geraden verbinden jeweils segmentförmig die Seitenwände 1'. Mittseitig des Schutzkörpers sind an dessen Seitenwänden 1' durch Nieten 4 die Enden von zwei Streben 3 drehbar gehaltert. Die Streben 3 bestehen aus je zwei durch Stiften 4' gelenkig miteinander verbundenen Teilen 3', 3''. Die freien Enden der Streben 3 besitzen je eine mit diesen fest zusammengefügte, kreisbogenförmige Klemme 5. Jede Klemme 5 ist durch offene, hohlzylindrische Profile gebildet, die in der Querrichtung elastisch sind und durch die Oeffnungen 5' zugänglich sind. Die Oeffnungen 5' haben eine Weite von ca. Einviertel des Umfanges der Klemme 5, und die Länge einer jeden Klemme 5 beträgt ca. 18-25 mm. Innen ist die Klemme 5 mit einer Rutschsicherung 6 versehen, welche aus weichem Material, wie Kunststoff oder Gummi besteht, und sich dem Profil der Klemme 5 gut anpasst. Die Klemmen 5 sind beim Gebrauch des Spritzschutzes auf die Vorderradgabel 7 und auf das Sattelrohr 8 eines Velorahmens aufgesteckt und festgelegt. Die Anordnung des Schutzkörpers 1 durch Aufstecken der Klemmen 5 auf die Vorderradgabel 7 erfolgt im unteren Bereich des Vorderrades R, ungefähr auf der Höhe der Pedale 9 vom Velo (Fig. 1), und zwar wenn sich diese beim Treten unten befinden. Die Kotspritzer 10 (Fig. 1) werden durch den Schutzkörper 1 aufgefangen und die Fussbekleidungen resp. die Schuhe des Fahrers damit weitgehend geschützt. Am Hinterrad R' erfolgt die Befestigung des Schutzkörpers 1 durch Aufstecken der zugehörigen Klemme 5 am Sattelrohr 8, etwa über der Hinterradachse 11 des Fahrrades. Der Schutzkörper 1 befindet sich dabei nahe der Oberseite des Hinterrades R', wie aus Fig. 1 hervorgeht, zwar dort wo die sich einstellenden Kotspritzer 10' aufwärts fliegen, so dass Gesäss und Rücken des Fajrers weitgehend geschützt werden. Die Ränder des Schutzkörpers 1 weisen nach aussen gerichtete Bördelungen 12 auf, welche versteifend wirken.

Ist ein Schutzkörper 1 vom Velo weggenommen, so können die Streben 3 um den Stiften 4 zusammengelegt und mitsamt den Klemmen 5 in den Hohlraum 13 des hohlgeformten Schutzkörpers eingelegt werden. Der Spritzschutz verwandelt sich dabei in ein kompaktes, transportables Gepäckstück, das leicht in Taschen mitgeführt werden kann.

An der Aussenseite des Schutzkörpers 1 ist ein Rückstrahlrefõeltpr-Band 14 festgelegt, welches zur Erhöhung der Verkehrssicherheit in der Dunkelheit und bei nebliger Sicht beiträgt.

Der beschriebene Spritzschutz lässt sich selbstverständlich auch für andere Fahrzeuge verwenden, wo es zur Anpassung an die Wetterverhältnisse wünschenswert ist, denselben augenblicklich wegzunehmen oder wieder anzubringen.

Die Grösse der Klemmen 5 richtet sich nach der Struktur des Velorahmens, normalerweise ist die für das Hinterrad bestimmte Klemme kleiner, für das Vorderrad dagegen grösser.

## Patentansprüche

Spritzschutz für Fahrräder, wie Rennvelos und dergl. mit einem hohlgeformten, kreisbogenförmigen Schutzkörper (1) und an diesem drehbar angelenkten Streben (3) mit Befestigungsmitteln (5) zum Festlegen am Fahrradrahmen (7, 8), wobei die Streben aus jeweils zwei zusammenlegbaren Teilen (3', 3'') bestehen, die bei Zusammenlegung in den Hohlraum (13) des Schutzkörpers (1) einfügbar sind, dadurch gekennzeichnet,

dass die die Enden des Schutzkörpers (1) verbindenden Geraden jeweils segmentförmige Seitenwände (1') begrenzen, dass die Länge des Schutzkörpers (1) etwa einem Zehntel des Umfangs des zugehörigen Rades (R, R') entspricht, und dass die zusammenlegbaren Teile (3', 3'') der Streben (3) gelenkig miteinander verbunden sind und an ihren freien Enden das Aufstecken auf Fahrradrahmenteile (7, 8) ermöglichende Klemmen (5, 6) aufweisen.

## Claim

Splash guard for bicycles, such as racing bicycles and the like, having a hollow, arc-shaped guard element (1) and struts (3) which are rotatably coupled to the said element and possess fastening means (5) for attachment to the bicycle frame (7, 8), the struts consisting in each case of two collapsible parts (3', 3'') which, when collapsed, can be inserted into the cavity (13) of the guard element (1),

characterized in that the straight lines joining the ends of the guard element (1) each define segment-shaped side walls (1'), the length of the guard element (1) is about one-tenth of the circumference of the associated wheel (R, R'), and the collapsible parts (3', 3'') of the struts (3) are connected to one another by a hinged joint and, at their free ends, possess clamps (5, 6) which make it possible to snap on to bicycle frame parts (7, 8).

## Revendication

Garde-boue pour roues de bicyclettes telle que bicyclette de course ou analogue, composé d'un organe de protection (1) de forme creuse en arc de cercle, auquel sont articulés de manière rotative des entretoises (3) avec des moyens de fixation (5) pour être fixées au cadre (7, 8) du vélo, les entretoises se composant respectivement de deux pièces repliables (3', 3'') qui, lors du repliage, peuvent se placer dans la cavité (13) de l'organe de protection (1), caractérisé en ce que les droites qui relient les extrémités de l'organe de protection (1) délimitent respectivement des parois latérales (1') en forme de segments, en ce que la longueur de l'organe de protection (1) correspond sensiblement à un dizième de la périphérie de la roue correspondante (R, R') et en ce que les parties repliables (3', 3'') des entretoises (3) sont articulées l'une à l'autre, et leurs extrémités libres comportent des pinces (5, 6) permettant leur emmanchement sur des parties de cadre (7, 8) du vélo.

FIG.1

FIG.2

FIG.3

FIG.4

FIG.5